# EUROPÄISCHE PATENTSCHRIFT

(11) **EP 3 140 020 B1**
(45) Veröffentlichungstag und Bekanntmachung des Hinweises auf die Patenterteilung: **09.12.2020**
(21) Anmeldenummer: 15723445.1
(22) Anmeldetag: 04.05.2015
(51) Int. Cl.: B01D 36/00

(54) **KOALESZENZELEMENT EINER WASSERABSCHEIDEVORRICHTUNG UND WASSERABSCHEIDEVORRICHTUNG**
COALESCING ELEMENT OF A WATER SEPARATOR DEVICE, AND WATER SEPARATOR DEVICE
ÉLÉMENT DE COALESCENCE D'UN DISPOSITIF DE SÉPARATION D'EAU ET DISPOSITIF DE SÉPARATION D'EAU

(30) Priorität: 05.05.2014 DE 102014007138
(43) Veröffentlichungstag der Anmeldung: 15.03.2017
(73) Patentinhaber: Mann+Hummel GmbH, 71636 Ludwigsburg (DE)
(72) Erfinder: VEIT, Martin, 71116 Gärtringen (DE); BOIGER, Gernot, 8409 Winterthur (CH); BEHLING, Gerd, 71522 Backnang (DE)
(74) Vertreter: Seyboth, Matthias
(86) Internationale Anmeldenummer: PCT/EP2015/059681
(87) Internationale Veröffentlichungsnummer: WO 2015/169729

(56) Entgegenhaltungen:
- WO-A1-2006/135226
- WO-A1-2013/083365
- DE-A1-102011 120 641
- GB-A- 1 123 148
- US-A- 3 228 527
- US-A- 3 567 619
- US-A- 4 502 956

## Beschreibung

### Technisches Gebiet

Die Erfindung betrifft ein Koaleszenzelement einer Wasserabscheidevorrichtung, insbesondere eines Kraftstofffilters, für Kraftstoff, insbesondere Dieselkraftstoff, insbesondere mit wenigstens einem Additiv, insbesondere einer Brennkraftmaschine, insbesondere eines Kraftfahrzeugs, das in einem Gehäuse der Wasserabscheidevorrichtung so angeordnet werden kann, dass es wenigstens einen Kraftstoffeinlass des Gehäuses von wenigstens einem Kraftstoffauslass trennt, wobei im Strömungsweg des Kraftstoffs wenigstens ein Koaleszenzmedium zur Abscheidung von im Kraftstoff enthaltenem Wasser angeordnet ist.

Ferner betrifft die Erfindung eine Wasserabscheidevorrichtung, insbesondere einen Kraftstofffilter, für Kraftstoff, insbesondere Dieselkraftstoff, insbesondere mit wenigstens einem Additiv, insbesondere einer Brennkraftmaschine, insbesondere eines Kraftfahrzeugs, mit einem Gehäuse, welches wenigstens einen Kraftstoffeinlass für zu behandelnden, insbesondere zu reinigenden, Kraftstoff, wenigstens einen Kraftstoffauslass für behandelten Kraftstoff und wenigstens einen Wasserauslass für vom Kraftstoff abgeschiedenes Wasser aufweist, wobei im Strömungsweg des Kraftstoffs wenigstens ein Koaleszenzmedium zur Abscheidung von im Kraftstoff enthaltenem Wasser angeordnet ist.

### Stand der Technik

Aus der DE 10 2011 120 641 A1 sind ein Kraftstofffilter für Kraftstoff, insbesondere Dieselkraftstoff, einer Brennkraftmaschine insbesondere eines Kraftfahrzeugs, und ein Filterelement bekannt. Ein Gehäuse des Kraftstofffilters weist wenigstens einen Kraftstoffeinlass für zu reinigenden Kraftstoff, wenigstens einen Kraftstoffauslass für gereinigten Kraftstoff und wenigstens einen Wasserauslass für vom Kraftstoff abgeschiedenes Wasser auf. In dem Gehäuse ist das Filterelement angeordnet, das den Kraftstoffeinlass dicht von dem Kraftstoffauslass trennt. Das Filterelement weist ein als Hohlkörper ausgestaltetes Filtermedium auf, das zur Filtrierung des Kraftstoffs von innen nach außen oder von außen nach innen durchströmbar ist. Im Strömungsweg des Kraftstoffs hinter dem Filtermedium, dieses umgebend oder in dem von ihm begrenzten Innenraum, ist ein als Hohlkörper gestaltetes Koaleszenzmedium zur Abscheidung von im Kraftstoff enthaltenem Wasser angeordnet. Das Koaleszenzmedium umfasst wenigstens eine Lage aus einem zur Koaleszenz von Wasser geeigneten Vlies. Eine Hauptorientierung von Fasern der wenigstens einen Vlieslage verläuft quer zu einem Hauptströmungsweg für das abgeschiedene Wasser stromabwärts des Koaleszenzmediums.

Aus der US 3 228 527 A und der US 3 567 619 A sind Kraftstofffiltereinrichtungen mit Wasserabscheidefunktion bekannt

Die WO 2006/135226 A1 offenbart ein Verfahren zum Trennen einer Flüssigkeitsmischung, die eine polare Flüssigkeit und eine unpolare Flüssigkeit umfasst.

Die GB 1 123 148 A beschreibt einen Getriebeölfilter.

Der Erfindung liegt die Aufgabe zugrunde, ein Koaleszenzelement einer Wasserabscheidevorrichtung und einer Wasserabscheidevorrichtung der eingangs genannten Art zu gestalten, bei dem die Abscheidung von im Kraftstoff enthaltenem Wasser weiter verbessert wird.

### Offenbarung der Erfindung

Diese Aufgabe wird erfindungsgemäß durch den Gegenstand des Anspruchs 1 gelöst.

Erfindungsgemäß wird zur Koaleszenz des Wassers wenigstens ein geeignetes schwammartiges Koaleszenzmaterial verwendet. Das wenigstens eine schwammartige Koaleszenzmaterial weist größere, zusammenhängende Bereiche auf. Die Bereiche können miteinander verbunden, insbesondere verschmolzen, sein. In und/oder zwischen den zusammenhängenden Bereichen sind Löcher oder Poren zum Auffangen der Wassertröpfchen und zum Durchtritt des Wassers vorgesehen.

An dem wenigstens einen Koaleszenzmedium werden auch kleinste Wassertröpfchen, welche im Kraftstoff enthalten sind, vereinigt und in einer anderen Stufe des Koafeszenzelements und/oder der Wasserabscheidevorrichtung zu größeren Wassertropfen vereinigt. Dabei werden die feinen Wassertröpfchen an dem wenigstens einen Koaleszenzmaterial zurückgehalten und vergrößert, bis sie von der Kraftstoffströmung wieder mitgerissen und aus dem wenigstens einen Koaleszenzmedium ausgetragen werden. Die Wassertröpfchen können in oberflächennahen Poren des schwammartigen Koaleszenzmaterials adsorbieren. Dabei gelangen die Wassertröpfchen in die Poren hinein und werden dort gehalten. Nachfolgende Wassertröpfchen können mit den in den Poren gehaltenen Wassertröpfchen zu größeren Wassertropfen koalieren.

Im Unterschied zum schwammartigen Koaleszenzmaterial können bei Vliesmaterial, welches bei aus dem Stand der Technik bekannten Kraftstofffiltern als Koaleszenzmaterial eingesetzt werden kann, die Wassertröpfchen im Wesentlichen nur an Knotenpunkten von Fasern des Vlieses koalieren. Ferner kann bei Vliesmaterial das Wasser in den Fasern eingelagert werden. Die Fasern können aufquellen und die Durchlassöffnungen zwischen den Fasern entsprechend verkleinert werden. Die Durchströmung des Wassers durch das Vliesmaterial kann verschlechtert werden. Entsprechende Druckdifferenzen zwischen der Einlassseite und der Auslassseite können so unerwünscht vergrößert werden.

Das schwammartige Koaleszenzmaterial kann extrem gute Saugeigenschaften aufweisen. Es kann daher eine entsprechend hohe Aufnahmekapazität für Wasser haben. Schwammartiges Koaleszenzmaterial kann das etwa 14-fache bis etwa 20-fache seines Trockengewichtes an Wasser aufnehmen. Das schwammartige Koaleszenzmaterial kann aufquellen, wodurch die Aufnahmekapazität für Wasser weiter erhöht werden kann.

Ferner kann das schwammartige Koaleszenzmaterial größere Abriebfestigkeit aufweisen als Vliesmaterial, so kann die Standzeit des Koaleszenzelements erhöht werden. Außerdem kann das schwammartige Koaleszenzmaterial eine größere Beständigkeit gegen Quetschen oder Pressen als herkömmliches Vliesmaterial aufweisen.

Das schwammartige Koaleszenzmaterial kann außerdem den Vorteil haben, dass es bei unterschiedlichen Kraftstoffen oder Kraftstoffzusammensetzungen seine Koaleszenzfunktion beibehalten kann. So kann auch bei der Reinigung von Kraftstoffen, insbesondere Dieselkraftstoff, weiche wenigstens ein Additiv enthalten können, die Funktion der Koaleszenz/Wasserabscheidung an dem wenigstens einen schwammartigen Koaleszenzmedium sichergestellt werden.

Additive sind Zusatzstoffe, die die Eigenschaften des Kraftstoffs verändern, insbesondere verbessern, können. Additive werden in der Regel im verhältnismäßig geringen Mengen dem Kraftstoff zugeführt.

Die Wassertropfen können stromabwärts des wenigstens einen schwammartigen Koaleszenzmediums insbesondere in einem Ausfällspalt in einer weiteren Stufe des Koaleszenzelements und/oder der Wasserabscheidevorrichtung ausgefällt werden. Sie können aufgrund ihres spezifischen Gewichts nach unten sinken. Dies kann als gravimetrische Wasserabscheidung bezeichnet werden.

Mit der erfindungsgemäßen Wasserabscheidevorrichtung, insbesondere dem erfindungsgemäßen Koaleszenzelement, können auch Kraftstoffe von Wasser befreit und gegebenenfalls gereinigt werden, deren spezifisches Gewicht größer ist als Wasser, bei denen analog die Wassertropfen räumlich nach oben steigen.

Zu diesem Zweck kann das Koaleszenzelement und/oder die Wasserabscheidevorrichtung umgedreht angeordnet werden. Entsprechend können der wenigstens eine Kraftstoffeinlass, der wenigstens eine Kraftstoffauslass und gegebenenfalls wenigstens eine Wasserauslass entsprechend angeordnet sein.

Vorteilhafterweise kann das Wasser insbesondere in wenigstens einem Wassersammelraum gesammelt werden. Der wenigstens eine Wassersammelraum kann vorteilhafterweise mit wenigstens einem Wasserauslass verbunden sein. Über den wenigstens einen Wasserauslass kann das Wasser aus dem wenigstens einen Wassersammelraum abgelassen werden.

Das Koaleszenzmedium kann vorteilhafterweise eine oder mehrere Lagen aus oder mit schwammartigem Koaleszenzmaterial aufweisen. Jede der Lagen kann in sich und/oder die Lagen untereinander können gleiches oder unterschiedliches Koaleszenzmaterial aufweisen. Zusätzlich zu dem schwammartigen Koaleszenzmaterial kann das wenigstens eine Koaleszenzmedium auch andersartiges Koaleszenzmaterial aufweisen.

Das Koaleszenzmedium kann vorteilhafterweise zu einem Balg geformt sein. Das Koaleszenzmedium kann vorteilhafterweise gefaltet, gebogen, plissiert und/oder gewickelt sein.

Das Koaleszenzmaterial ist Schwammtuchmaterial oder weist dieses auf. Bei dem Schwammtuchmaterial kann es sich um ein insbesondere schichtförmiges Gebilde handeln. Das Schwammtuchmaterial kann vorteilhafterweise eine Dicke im trockenen Zustand von etwa 0,4 cm bis 2 cm aufweisen. Das Schwammtuchmaterial kann nach einem Viskoseverfahren, insbesondere einem Cellulosexanthogenat-Verfahren, hergestellt sein.

Die Erfindung ist nicht beschränkt auf eine Wasserabscheidevorrichtung einer Brennkraftmaschine eines Kraftfahrzeugs. Vielmehr kann sie auch bei andersartigen Brennkraftmaschinen, beispielsweise bei Industriemotoren, eingesetzt werden.

Statt für Dieselkraftstoff kann die Wasserabscheidevorrichtung auch zur Wasserabscheidung/Reinigung von andersartigem flüssigem Kraftstoff eingesetzt werden.

Das erfindungsgemäße Koaleszenzelement weist wenigstens ein Filtermedium auf. Das Koaleszenzelement kann auch als Filterelement bezeichnet werden.

Mit dem wenigstens einen Filtermedium können insbesondere Partikel, welche den Kraftstoff verunreinigen, in einer Stufe des Koaleszenzelements herausgefiltert werden.

Vorteilhafterweise kann das wenigstens eine Filtermedium als Hohlkörper ausgestaltet sein.

Vorteilhafterweise kann das Filtermedium zur Filtrierung des Kraftstoffs von innen nach außen oder von außen nach innen durchströmbar sein.

Das Koaleszenzelement, insbesondere das Filterelement, kann mehrstufig sein. Der Kraftstoff kann zur Reinigung und Wasserabscheidung das wenigstens eine Filtermedium und das wenigstens eine Koaleszenzmedium durchströmen.

Das wenigstens eine Koaleszenzmedium kann vorteilhafterweise abströmseitig des wenigstens einen Filtermediums angeordnet sein. Auf diese Weise kann das wenigstens eine Koaleszenzmedium mittels dem wenigstens einen Filtermedium vor Verschmutzung geschützt werden. Alternativ oder zusätzlich kann anströmseitig des wenigstens einen Filtermediums wenigstens ein Koaleszenzmedium angeordnet sein,

Vorteilhafterweise kann das wenigstens eine Koaleszenzmedium in einem Innenraum des wenigstens einen Filtermediums angeordnet sein. Es kann von dem wenigstens einen Filtermedium umgeben sein. Bei einer Durchströmung des Filtermediums von außen nach innen kann das wenigstens eine Koaleszenzmedium so abströmseitig des wenigstens einen Filtermediums angeordnet sein. Bei umgekehrter Durchströmung des Filtermediums kann das wenigstens eine Koaleszenzmedium anströmseitig angeordnet sein. Alternativ oder zusätzlich kann das wenigstens eine Koaleszenzmedium das wenigstens eine Filtermedium umgeben. Entsprechend kann das wenigstens eine Koaleszenzmedium anströmseitig oder abströmseitig des wenigstens einen Filtermediums angeordnet sein,

Vorteilhafterweise kann das wenigstens eine Koaleszenzmedium das wenigstens eine Filtermedium abströmseitig und/oder anströmseitig wenigstens teilweise abdecken.

Das wenigstens eine Koaleszenzmedium kann vorteilhafterweise das wenigstens eine Filtermedium anströmseitig und/oder abströmseitig vollständig abdecken. Auf diese Weise muss der Kraftstoff das wenigstens eine Koaleszenzmedium zwangsweise passieren. Alternativ oder zusätzlich kann wenigstens ein Koaleszenzmedium das wenigstens eine Filtermedium anströmseitig und/oder abströmseitig lediglich teilweise abdecken. Auf diese Weise kann der Kraftstoff durch entsprechende Lücken des wenigstens einen Koaleszenzmediums strömen und so das Koaleszenzmedium umgehen.
Das wenigstens eine Filtermedium kann wenigstens eine Partikelfilterlage aufweisen. Es kann vorteilhafterweise Filterpapier, Filtervlies oder ein andersartiges, insbesondere schaumartiges, Filtermaterial aufweisen, welches geeignet ist, Partikel aus dem Kraftstoff, insbesondere Dieselkraftstoff, herauszufiltern.

Vorteilhafterweise kann das wenigstens eine Filtermedium aus einer oder mehreren Lagen bestehen. Das wenigstens eine Filtermedium kann vorteilhafterweise gefaltet, gebogen, plissiert und/oder gewickelt sein. Das Filtermedium, insbesondere der Filtermediumhohlkörper, kann vorteilhafterweise balgartig sein. Das Filtermedium kann vorteilhafterweise sternförmig gefaltet sein. Vorteilhafterweise kann das Filtermedium zickzackförmig gefaltet und umfangsmäßig geschlossen sein. Der Filtermediumhohlkörper kann vorteilhafterweise wenigstens eine Öffnung aufweisen. Durch die Öffnung kann der zu reinigende Kraftstoff in den Innenraum des Filtermediumhohlkörpers hinein oder gereinigter Kraftstoff aus dem Innenraum heraus gelangen. Der Filtermediumhohlkörper kann vorteilhafterweise auf wenigstens einer Stirnseite mit einem Endkörper, insbesondere einer Endscheibe, bevorzugt dicht verbunden sein. Mit dem wenigstens einen Endkörper kann das Filtermedium stabilisiert werden. Wenigstens einer der Endkörper kann eine Öffnung aufweisen. Die Öffnung kann gegebenenfalls mit der Öffnung des Filtermediumhohlkörpers verbunden sein.

Das wenigstens eine Filtermedium kann vorteilhafterweise die Form eines Hohlzylinders, insbesondere eines Kreiszylinders, aufweisen. Alternativ kann das Filtermedium auch in anderer Form, insbesondere als eine Art Hohlkegel, realisiert sein. Der Filtermediumhohlkörper kann statt mit einer runden Grundfläche auch mit einer andersartigen, insbesondere ovalen oder eckigen, Grundfläche realisiert sein.
Bei einer weiteren vorteilhaften Ausführungsform kann das wenigstens eine Koaleszenzmaterial synthetisch hergestellt sein. Auf diese Weise kann das Koaleszenzmaterial speziell für den Zweck der Zusammenführung von kleinsten Wassertröpfchen bei der Wasserabscheidung bei Kraftstoffen, insbesondere Kraftstoffen mit Additiven, optimiert sein. Ferner kann so die Beständigkeit gegenüber dem Kraftstoff und/oder dem wenigstens einen Additiv erhöht werden.

Bei einer weiteren vorteilhaften Ausführungsform kann das wenigstens eine Koaleszenzmaterial Cellulose, insbesondere Viskose oder regenerierte Cellulose, oder eine Mischung aus Cellulose, insbesondere Viskose oder regenerierter Cellulose, und Baumwolle zumindest aufweisen. Mit Cellulose/Viskose und Mischungen aus Cellulose/Viskose und Baumwolle kann eine Wasserabscheidung bei Kraftstoff verbessert werden. Insbesondere kann die Wasserabscheidung bei Kraftstoffen mit wenigstens einem Additiv weiter verbessert werden.

Die Cellulose/Viskose kann vorteilhafterweise gegebenenfalls wenigstens ein Bindematerial des wenigstens einen Koaleszenzmaterials wenigstens mit bilden. Die Baumwolle kann vorteilhafterweise gegebenenfalls wenigstens ein Trägermaterial des wenigstens einen Koaleszenzmaterials wenigstens mit bilden. Die Baumwolle kann als "Vernetzer" dienen.

Vorteilhafterweise kann das wenigstens eine Koaleszenzmaterial aus einem Anteil von etwa 70 % Holz als Ausgangsmaterial hergestellt sein. Das Holz kann vorteilhafterweise insbesondere in Reaktoren mittels Lösemitteln zu Viskose verarbeitet werden. Vorteilhafterweise werden dabei Fasern nicht zerstört.

Bei einer weiteren vorteilhaften Ausführungsform kann das wenigstens eine Koaleszenzmaterial Fasern, insbesondere Cellulosefasern/Viskose und/oder Baumwollfasern, aufweisen. Das Koaleszenzmaterial kann dabei eine Mischung der entsprechenden Fasern aufweisen. Die Fasern können das wenigstens eine Koaleszenzmaterial mechanisch stabilisieren. Die Fasern können gegebenenfalls das wenigstens eine Trägermaterial mit bilden. Sie können als Stapelfasern dienen.

Vorteilhafterweise können die Fasern, insbesondere die Baumwollfasern, Längen in der Größenordnung von etwa 20 mm aufweisen.

Vorteilhafterweise kann das Ausgangsmaterial für das wenigstens eine Koaleszenzmaterial einen Anteil von 30 % Baumwolle aufweisen.

Vorteilhafterweise kann zur Herstellung des Koaleszenzmaterials Baumwolle als Stapelfaser insbesondere durch Reißen vereinzelt werden. Anschließend kann die Baumwolle mit Natronlauge befeuchtet werden.

Bei einer weiteren vorteilhaften Ausführungsform kann das wenigstens eine Koaleszenzmaterial aus einer Masse hergestellt sein, die einen Porenbildner, insbesondere Glaubersalz, enthält, wobei der Porenbildner beim fertigen Koaleszenzmaterial entfernt sein kann.

Vorteilhafterweise kann zur Herstellung des wenigstens einen Koaleszenzmaterials wenigstens ein Bindematerial, insbesondere Viskose, und wenigstens einen Trägermaterial, insbesondere Baumwolle, insbesondere in Form von Fasern, zusammen mit einem Porenbildner, insbesondere Salzkristalle, vorzugsweise Glaubersalz, und gegebenenfalls Farbstoffen vermischt und verknetet werden. Die Masse kann in dem Knetprozess dreidimensional vernetzt werden. Dabei kann ermöglicht werden, dass keine künstliche Faserbildung und keine mechanische zusätzliche Verfestigung entstehen. Die verknetete Masse kann eine verhältnismäßig hohe Viskosität aufweisen.

Die verknetete Masse kann insbesondere maschinell auf eine Trägerbahn, insbesondere ein Gitter, gestrichen werden. Die Masse kann dabei insbesondere auf die Trägerbahn insbesondere mittels Düsen abgelegt werden. Die Masse kann auf die Trägerbahn gepresst werden.

Die Masse kann insbesondere auf der Trägerbahn getrocknet werden. Dabei wird die Masse fest. Der eingearbeitete Porenbildner dient der Porenbildung. Der Porenbildner gibt dabei die Porengröße vor. In dem Verfestigungsprozess kann die Cellulose, insbesondere Viskose, regeneriert werden. Die Cellulose/Viskose und die Baumwolle können sich zu einer Einheit verbinden.

Der Porenbildner, insbesondere die Kristalle des Glaubersalzes, können, insbesondere mit Wasser und/oder Säure, ausgewaschen werden. Das fertigte schwammartige Koaleszenzmaterial weist die entsprechenden Poren auf. Dabei kann das wenigstens eine Trägermaterial eine Festigkeit und/oder Vernetzung vorgeben. Das wenigstens eine Bindematerial kann flächige/zusammenhängende Bereiche bilden.

Im Unterschied zum schwammartigen Koaleszenzmaterial werden bei der Herstellung von bekanntem Vliesmaterial verschiedene Einzelfaserarten vermischt abgelegt und verfestigt. Dies kann mittels einem Wasserstrahlverfahren oder Vernadelung geschehen. Viskosefasern werden dazu separat hergestellt, also in Lösung gebracht und mit Düsen gesponnen, und als Fasern zugegeben.

Bei einer weiteren vorteilhaften Ausführungsform kann das wenigstens eine Koaleszenzmaterial wenigstens ein Trägermaterial umfassen, welches mit wenigstens einem Bindematerial durchwirkt sein kann. Auf diese Weise kann das wenigstens eine Trägermaterial mit dem wenigstens einen Bindematerial einen Verbund eingehen oder bilden. So können größere, zusammenhängende Bereiche mit dazwischenliegenden Löchern realisiert werden. Die Bereiche können mit dem wenigstens einen Bindematerial verbunden sein.

Das wenigstens eine Trägermaterial, insbesondere Baumwolle, kann als "Vernetzer" dienen. Es kann zur Festigkeit des wenigstens einen Koaleszenzmaterials beitragen, insbesondere diese im Wesentlichen bewirken,

Vorteilhafterweise kann das wenigstens eine Koaleszenzmaterial als Schichtstruktur realisiert sein. Auf diese Weise kann eine von dem Kraftstoff durchströmbare Dicke des Koaleszenzmediums variiert werden.

Vorteilhafterweise kann das wenigstens eine Trägermaterial wenigstens einen synthetischen Anteil und/oder wenigstens einen nichtsynthetischen Anteil aufweisen.

Vorteilhafterweise kann das wenigstens eine Trägermaterial wenigstens ein Textil, ein Gewebe, ein nichtgewebtes (nonwoven) Material, ein Netz, ein Gitter, ein Geflecht, ein Gestrick, ein Gewirk, ein Nähgewirk, ein Vlies, ein Filz und/oder ein anderes Fasern aufweisendes oder faserfreies Material aufweisen.

Vorteilhafterweise kann das wenigstens eine Trägermaterial Fasern, insbesondere Baumwollfasern und/oder Cellulosefasern und/oder Viskosefasern, aufweisen. Das wenigstens eine Trägermaterial kann mit dem wenigstens einen Bindematerial verbunden, umgeben oder in einer anderen Weise insbesondere nicht faserig oder textilartig durchwirkt sein.

Das wenigstens eine Bindematerial kann vorteilhafterweise zur Herstellung des wenigstens einen Koaleszenzmaterials zunächst fließfähig sein. Auf diese Weise kann das wenigstens eine Bindematerial das wenigstens eine Trägermaterial durchwirken. Das Bindematerial kann etwaige Trägerstrukturen des Trägermaterials umfließen und/oder einbetten/einhüllen.

Vorteilhafterweise kann das wenigstens eine Bindematerial zur Herstellung des wenigstens einen Koaleszenzmaterials nicht textilartig verarbeitet, insbesondere gesponnen, gewebt, geflochten, genäht, gestrickt, gewirkt oder dergleichen, sein.

Vorteilhafterweise kann das wenigstens eine Bindematerial wenigstens Viskose aufweisen. Das wenigstens eine Bindematerial kann vorteilhafterweise frei von Fasern sein. Auf diese Weise kann die Fließfähigkeit verbessert werden. Ferner kann so die Verbundfähigkeit mit dem Trägermaterial verbessert werden. Alternativ kann das wenigstens eine Bindematerial Fasern enthalten. Es kann so zur Festigkeit des wenigstens einen Koaleszenzmaterials beitragen.

Das wenigstens eine Koaleszenzmedium ist als Hohlkörper gestaltet Der Hohlkörper des wenigstens einen Koaleszenzmediums kann einfach gegebenenfalls in dem Innenraum des Hohlkörpers des wenigstens einen Filtermediums angeordnet werden. Alternativ kann der wenigstens eine Filtermediumhohlkörper in dem Hohlkörper des wenigstens einen Koaleszenzmediums angeordnet werden. Die entsprechenden Umfangsseiten der Hohlkörper können dabei aneinander anliegen. Die Umfangsseiten der Hohlkörper können sich gegenseitig abstützen. Alternativ können die Umfangsseiten der Hohlkörper zueinander beabstandet sein.

Vorteilhafterweise können der Hohlkörper des wenigstens einen Koaleszenzmediums und gegebenenfalls der Hohlkörper des wenigstens einen Filtermediums eine ähnliche Form aufweisen. Sie können vorteilhafterweise zueinander passende Größen aufweisen. Auf diese Weise können die Hohlkörper platzsparend ineinander angeordnet werden.

Der Hohlkörper des wenigstens einen Koaleszenzmediums kann vorteilhafterweise eine zylindrische oder konische Form aufweisen. Der Querschnitt des Hohlkörpers kann vorteilhafterweise rund, oval oder eckig sein. Der Hohlkörper kann vorteilhafterweise umfangsmäßig geschlossen sein. Der Hohlkörper kann vorteilhafterweise wenigstens an einer seiner Stirnseiten offen sein. Dort kann das abgeschiedene Wasser und/oder der Kraftstoff aus einem Innenraum des Hohlkörpers heraus oder mit Wasser belasteter Kraftstoff in den Innenraum des Hohlkörpers hinein gelangen.

In einem Innenraum des Koaleszenzelements, insbesondere eines Koaleszenzmedium-Hohlkörpers und/oder gegebenenfalls eines Filtermediumhohlkörpers, oder dieses umgebend kann wenigstens ein Stützkörper, insbesondere ein Stützrohr, angeordnet sein. An dem wenigstens einen Stützkörper kann sich das wenigstens eine Koaleszenzmedium und/oder gegebenenfalls wenigstens ein Filtermedium abstützen.

Bei der erfindungsgemäßen Ausführungsform ist im Strömungsweg des Kraftstoffs hinter dem wenigstens einen Koaleszenzmedium, dieses umgebend oder in dem von ihm begrenzten Innenraum, wenigstens ein als Hohlkörper gestaltetes hydrophobes, kraftstoffdurchlassiges Trennmedium zur Abscheidung von im Kraftstoff enthaltenem Wasser angeordnet, derart, dass zwischen dem wenigstens einen Koaleszenzmedium und dem wenigstens einen Trennmedium wenigstens ein Ausfällspalt für abgeschiedenes Wasser realisiert ist. An dem wenigstens einen Trennmedium können Wassertropfen, welche im Kraftstoff enthalten sind, zurückgehalten werden. Auf diese Weise kann die Wasserabscheidung verbessert werden. Vorteilhafterweise können die Wassertropfen, welche mit dem wenigstens einen Koaleszenzmedium vereinigt wurden, besser abgeschieden werden.

Vorteilhafterweise kann das wenigstens eine Trennmedium den wenigstens einen Ausfällspalt auf der dem wenigstens einen Koaleszenzmedium gegenüberliegenden Seite begrenzen. Die mit dem wenigstens einen Koaleszenzmedium vereinigten großen Wassertropfen können im Strömungsweg des Kraftstoffs hinter dem wenigstens einen Koaleszenzmedium in dem wenigstens einen Ausfällspalt ausgefällt werden. Sie können abhängig vom spezifischen Gewicht des Kraftstoffs nach unten sinken oder nach oben steigen.

Vorteilhafterweise kann das wenigstens eine Trennmedium siebartig sein. Ein siebartiges, insbesondere gewebtes Trennmedium hat den Vorteil, dass die Wassertropfen an den Siebfasern gehalten werden und insbesondere nach unten abtropfen beziehungsweise nach oben steigen können. An einem siebartigen Trennmedium kann das Wasser optimal zurückgehalten werden. Die Maschenöffnungen eines siebartigen Gewebes können einfach und definiert vorgegeben werden. Es kann optimal durchlässig für den Kraftstoff ausgestaltet sein. Mit einer siebartigen Struktur kann einfach der Druckverlust an dem wenigstens einen Trennmedium minimiert werden.

Das wenigstens eine Trennmedium kann vorteilhafterweise eine ähnliche Form aufweisen wie der Hohlkörper des wenigstens einen Filtermediums und/oder gegebenenfalls der Hohlkörper des wenigstens einen Koaleszenzmediums. Auf diese Weise können die Hohlkörper und das Trennmedium platzsparend ineinander angeordnet werden.

Das wenigstens eine Trennmedium kann vorteilhafterweise eine zylindrische oder konische Form aufweisen. Der Querschnitt des wenigstens einen Trennmediums kann vorteilhafterweise rund, oval oder eckig sein. Das wenigstens eine Trennmedium kann vorteilhafterweise umfangsmäßig geschlossen sein. Das wenigstens eine Trennmedium kann vorteilhafterweise wenigstens an einer seiner Stirnseiten offen sein. Dort kann der von Wasser befreite Kraftstoff aus einem Innenraum des wenigstens einen Trennmediums heraus gelangen oder der mit Wasser belastete Kraftstoff zur Wasserabscheidung in den Innenraum geleitet werden.

Vorteilhafterweise kann der wenigstens eine Ausfällspalt gegebenenfalls mit dem wenigstens einen Wassersammelraum und/oder dem wenigstens einen Wasserauslass des Gehäuses des Kraftstofffilters verbunden sein.

Bei einer weiteren vorteilhaften Ausführungsform können das wenigstens eine Koaleszenzmedium, das wenigstens eine Filtermedium und/oder das wenigstens eine Trennmedium koaxial angeordnet sein. Eine koaxiale Anordnung ist platzsparend, Ferner kann in einer koaxialen Anordnung ein Strömungsverlauf des Kraftstoffs von radial außen nach radial innen oder radial innen nach radial außen einfach optimiert werden. Die Grundflächen des wenigstens einen Koaleszenzmediums, des wenigstens einen Filtermediums und/oder des wenigstens einen Trennmediums können dabei ähnlich sein. Die Grundflächen können aber auch unterschiedlich sein. Sie können insbesondere rund, oval oder eckig sein.

Das wenigstens eine Koaleszenzmedium, das wenigstens eine Filtermedium und/oder das wenigstens eine Trennmedium können auch anders als koaxial angeordnet sein.

Bei einer weiteren vorteilhaften Ausführungsform kann das Koaleszenzelement ein Rundfilterelement sein. Es kann sich dabei vorteilhafterweise um ein Rundfilterelement mit einem runden Querschnitt, ein ovales Rundfilterelement mit einem ovalen Querschnitt, ein konisches Rundfilterelement, welches eine kegelartige Form aufweist, oder ein konisch-ovales Rundfilterelement handeln. Rundfilterelemente zeichnen sich durch ein bezüglich einer Elementachse umfangsmäßig geschlossenes Filtermedium aus. An wenigstens einer Stirnseite kann das Filtermedium mit einem Endkörper, insbesondere einer Endscheibe, bevorzugt dicht verbunden sein. Wenigstens einer der Endkörper kann einen zentralen Durchlass für den Kraftstoff aufweisen. Der Kraftstoff kann das Rundfilterelement bezüglich der Elementachse von radial außen nach radial innen oder umgekehrt durchströmen.

Rundfilterelemente können platzsparend aufgebaut werden. Mit Rundfilterelementen kann ein optimales Verhältnis von Filter-/Abscheidefläche zum Bauraum realisiert werden.

Die Aufgabe wird erfindungsgemäß ferner durch die Wasserabscheidevorrichtung nach Anspruch 8 gelöst

Die im Zusammenhang mit dem erfindungsgemäßen Koaleszenzelement und dessen vorteilhafte Ausführungsformen aufgezählten Vorteile und Merkmale gelten für die erfindungsgemaße Wasserabscheidevorrichtung und deren vorteilhafte Ausführungsformen entsprechend und umgekehrt.

Vorteilhafterweise kann das wenigstens eine Koaleszenzmedium Bestandteil eines Koaleszenzelements, insbesondere eines erfindungsgemaßen Koaleszenzelements, sein.

Bei einer vorteilhaften Ausführungsform kann in dem Gehäuse wenigstens ein Filtermedium angeordnet sein.

Vorteilhafterweise kann das wenigstens eine Filtermedium Bestandteil eines Koaleszenzelements, insbesondere eines erfindungsgemäßen Koaleszenzelements, sein. Das Koaleszenzelement kann in diesem Fall auch als Filterelement bezeichnet werden. Entsprechend kann die Wasserabscheidevorrichtung auch als Kraftstofffilter bezeichnet werden.

Vorteilhafterweise kann das wenigstens eine Filtermedium den wenigstens einen Kraftstoffeinlass von dem wenigstens einen Kraftstoffauslass trennen. Vorteilhafterweise kann das wenigstens eine Filtermedium als Hohlkörper ausgestaltet sein.

Vorteilhafterweise kann das wenigstens eine Filtermedium zur Filtrierung des Kraftstoffs von innen nach außen oder von außen nach innen durchströmbar sein.

Vorteilhafterweise kann das wenigstens eine Koaleszenzmedium im Strömungsweg hinter und/oder vor dem wenigstens einen Filtermedium angeordnet sein.

Vorteilhafterweise kann das wenigstens eine Koaleszenzmedium das wenigstens eine Filtermedium abströmseitig und/oder anströmseitig wenigstens teilweise abdecken.

Bei einer weiteren vorteilhaften Ausführungsform kann das Gehäuse öffenbar sein und das wenigstens eine Koaleszenzmedium, insbesondere ein Koaleszenzelement, kann austauschbar im Gehäuse angeordnet sein. Das wenigstens eine Koaleszenzmedium, insbesondere das wenigstens eine Koaleszenzelement, kann so einfach zum Austausch oder zu Wartungszwecken aus dem Gehäuse entfernt werden.

Alternativ kann das Koaleszenzmedium/Koaleszenzelement auch fest in dem Gehäuse angeordnet sein. In diesem Fall ist es nicht erforderlich, dass das Gehäuse öffenbar ist.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen
- Figur 1: einen schematischen Längsschnitt eines Kraftstofffilters mit einem austauschbaren, dreistufigen Filterelement, das ein Koaleszenzmedium aus einem Schwammtuchmaterial aufweist;
- Figuren 2 und 3: schematische Darstellungen des Schwammtuchmaterials des Kraftstofffilters aus der Figur 1, in Durchströmrichtung des Kraftstoffs betrachtet;
- Figur 4: eine schematische Darstellung des Schwammtuchmaterials des Kraftstofffilters aus der Figur 1, quer zur Durchströmrichtung des Kraftstoffs betrachtet;
- Figur 5: eine schematische Darstellung eines aus dem Stand der Technik bekannten Koaleszenzmediums aus einem Vlies, in Durchströmrichtung des Kraftstoffs betrachtet.

In den Figuren sind gleiche Bauteile mit gleichen Bezugszeichen versehen.

### Ausführungsform(en) der Erfindung

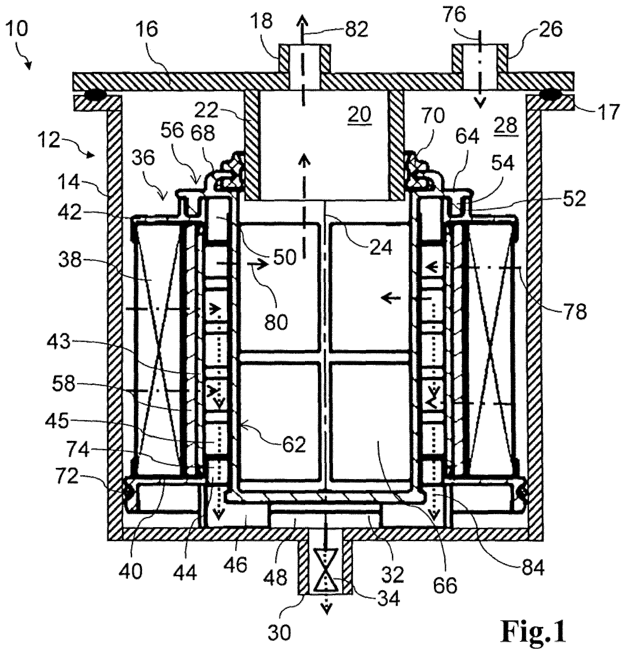

In der Figur 1 ist im Längsschnitt ein Kraftstofffilter 10 eines Kraftstoffsystems einer Brennkraftmaschine eines Kraftfahrzeugs gezeigt. Der Kraftstofffilter 10 dient zur Reinigung des für den Betrieb der Brennkraftmaschine verwendeten Kraftstoffs, beispielsweise Dieselkraftstoff. Der Kraftstoff enthält ein Additiv zur Verbesserung der Eigenschaften des Kraftstoffs. Ferner dient der Kraftstofffilter 10 zur Abscheidung von in dem Kraftstoff enthaltenem Wasser.

Der Kraftstofffilter 10 verfügt über ein zweiteiliges Gehäuse 12 mit einem becherförmigen Filtertopf 14 und einem Filterdeckel 16, der trennbar auf dem Filtertopf 14 angeordnet ist. Zwischen dem Filtertopf 14 und dem Filterdeckel 16 ist eine Ringdichtung 17 angeordnet.

In dem Deckel 16 ist etwa zentral ein Auslassstutzen 18 für den gereinigten Kraftstoff angeordnet, weicher außerhalb des Gehäuses 12 mit einer in der Figur 1 nicht gezeigten Kraftstoffableitung verbunden ist. Im Inneren des Gehäuses 12 ist der Auslassstutzen 18 mit einem Ablaufraum 20 in einem Innenraum eines Verbindungsstutzens 22 verbunden. Der Verbindungsstutzen 22 erstreckt sich auf der dem Inneren des Gehäuses 12 zugewandten Seite des Deckels 16 koaxial zu einer Filterachse 24.

In der normalen Einbaulage unter normalen Betriebsbedingungen der Brennkraftmaschine verläuft die Filterachse 24, wie in der Figur 1 gezeigt, räumlich vertikal. "Axial", "radial", "koaxial" und "umfangsmäßig" beziehen sich im Folgenden, wenn nicht anders angegeben, auf die Filterachse 24.

Radial außerhalb des Verbindungsstutzens 22 weist der Deckel 16 einen Einlassstutzen 26 für den zu reinigenden Kraftstoff auf, der mit einem Zulaufraum 28 im Gehäuse 12 verbunden ist. Außerhalb des Gehäuses 12 ist der Einlassstutzen 26 mit einer in der Figur 1 nicht gezeigten Kraftstoffeuleitung für den Kraftstoff verbunden.

Im Boden des Filtertopfs 14 ist ein Wasserablaufstutzen 30 koaxial zur Filterachse 24 angeordnet. Der Wasserablaufstutzen 30 ist mit einem Wassersammelraum 32 unten im Gehäuse 12 verbunden. Außerhalb des Gehäuses 12 ist der Wasserablaufstutzen 30 mit einer nicht gezeigten Wasserablassleitung verbunden, über die von dem Kraftstoff abgeschiedenes Wasser aus dem Gehäuse 12 abgeleitet werden kann. In dem Wasserablaufstutzen 30 ist ein Wasserablassventil 34 mit einem Wasserstandsensor angeordnet. Im Ruhezustand ist das Wasserablassventil 34 geschlossen, sodass keine Flüssigkeit aus dem Wassersammelraum 32 durch den Wasserablaufstutzen 30 aus dem Gehäuse 12 entweichen kann. Bei Erreichen eines vorgegebenen maximalen Wasserstandes im Wassersammelraum 32 öffnet das Wasserablassventil 34 automatisch, sodass das abgeschiedene Wasser über den Wasserablaufstutzen 30 abgelassen werden kann.

In dem Gehäuse 12 ist ein austauschbares Filterelement 36 angeordnet. Das Filterelement 36 ist als Rundfilterelement ausgestaltet. Das Filterelement 36 trennt den Einlassstutzen 26 dicht von dem Auslassstutzen 18. Das Filterelement 36 umfasst ein sternförmig gefaltetes Filtermedium 38, mit dem insbesondere Partikel aus dem zu reinigenden Kraftstoff heraus filtriert werden. Das Filtermedium 38 hat insgesamt die Form eines koaxialen Kreiszylindermantels. An einer dem Boden des Filtertopfs 14 zugewandten unteren Stirnseite ist das Filtermedium 38 dicht mit einer Abschlussendscheibe 40 verbunden. An seiner gegenüberliegenden, dem Deckel 16 zugewandten oberen Stirnseite ist das Filtermedium 38 dicht mit einer Anschlussendscheibe 42 verbunden. Zwischen der Anschlussendscheibe 42 und der Abschlussendscheibe 40 erstreckt sich in einem Innenraum 45 des Filtermediums 38 koaxial ein skelettartiges, fluiddurchlässiges Mittelrohr 43, welches die beiden Endscheiben 40 und 42 miteinander verbindet.

Die Abschlussendscheibe 40 weist eine koaxiale Öffnung 44 auf. Die Öffnung 44 ist von dem Mittelrohr 43 umgeben. Die Öffnung 44 verbindet den Innenraum 45 mit dem Wassersammelraum 32. Auf der dem Boden des Filtertopfs 14 zugewandten Außenseite verfügt die Abschlussendscheibe 40 über beispielhaft vier Stützstege 46, die sich gleichmäßig verteilt entlang eines gedachten koaxialen Kreiszylindermantels erstrecken. Es können auch mehr oder weniger als vier Stützstege 46 vorgesehen sein. Der gedachte Kreiszylindermantel umgibt die Öffnung 44 und den Wasserablaufstutzen 30. Mit den Stützstegen 46 wird das Filterelement 36 gegen den Boden des Filtertopfs 14 abgestützt. Zwischen den Stützstegen 46 befinden sich Verbindungsöffnungen 48, über die sich Wasser im Wassersammelraum 32 auch radial außerhalb der Stützstege 46 verteilen kann.

Die Anschlussendscheibe 42 weist eine koaxiale Öffnung 50 auf. Die Öffnung 50 ist von zwei koaxialen Vorsprüngen umgeben, die sich an der Außenseite der Anschlussendscheibe 42 in axialer Richtung erstrecken. Die beiden Vorsprünge begrenzen eine Aufnahmenut 52 für einen ringartigen Einstecksteg 54 einer Trenneinheit 56 des Filterelements 36.

Zwischen der radial inneren Umfangsseite des Filtermediums 38 und dem Mittelrohr 43 befindet sich ein koaxiales Koaleszenzmedium 58. Das Koaleszenzmedium 58 besteht aus einer Lage eines Schwammtuchmaterials. Das Koaleszenzmedium 58 ist umfangsmäßig geschlossen und erstreckt sich zwischen der Anschlussendscheibe 42 und der Abschlussendscheibe 40. Das Koaleszenzmedium 58 dient der Zusammenführung auch von kleinsten im Kraftstoff enthaltenen Wassertröpfchen zu größeren Wassertropfen. Aufgrund seiner Koaleszenzfunktion und/oder seiner Wasserabscheidefunktion kann das Filterelement 36 auch als Koaleszenzelement bezeichnet werden. Entsprechend kann der Kraftstofffilter 10 als Wasserabscheidevorrichtung für Kraftstoff bezeichnet werden.

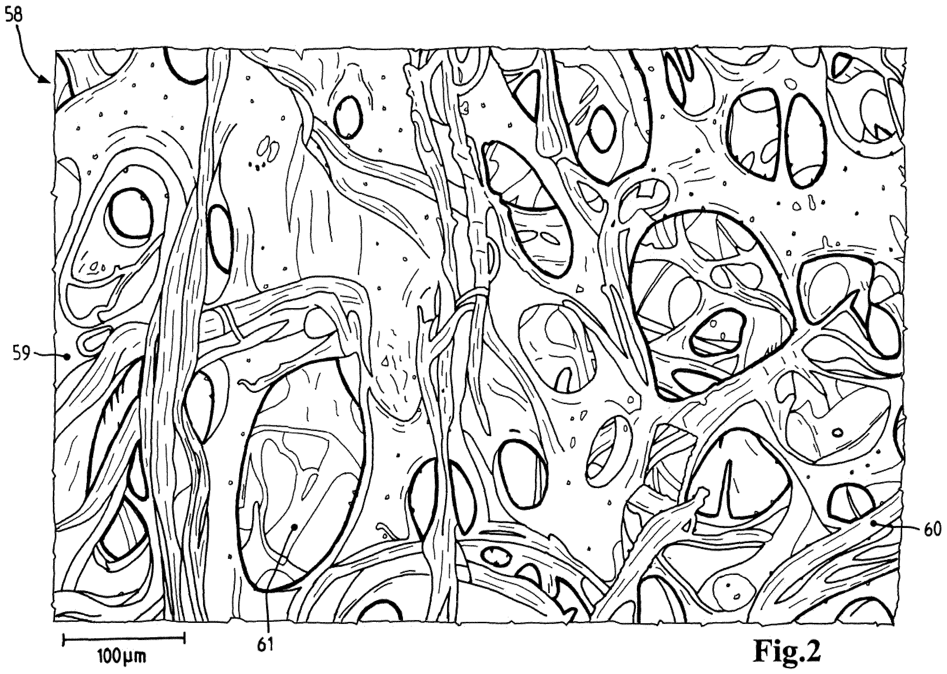

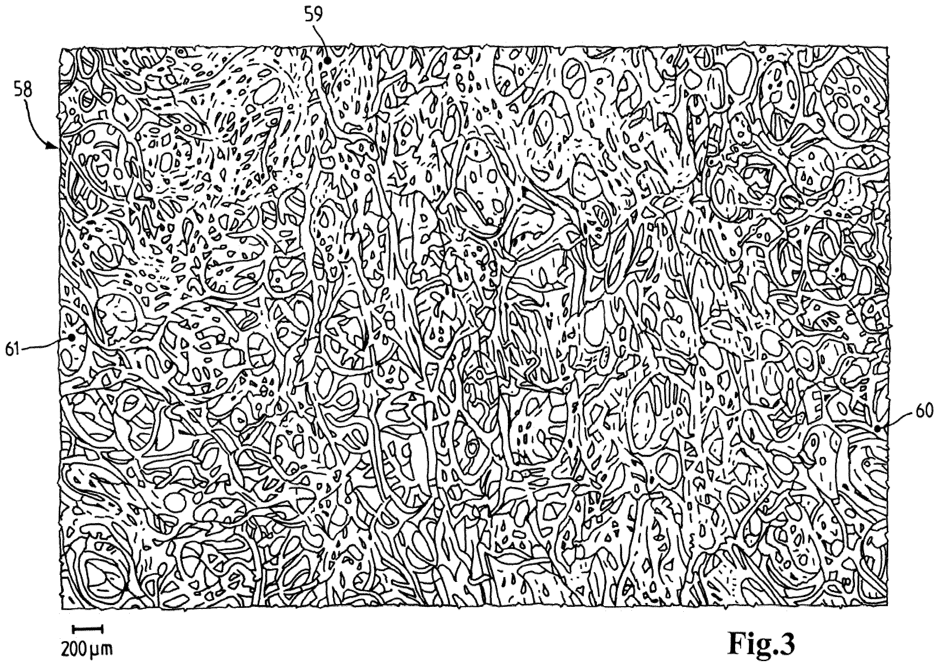

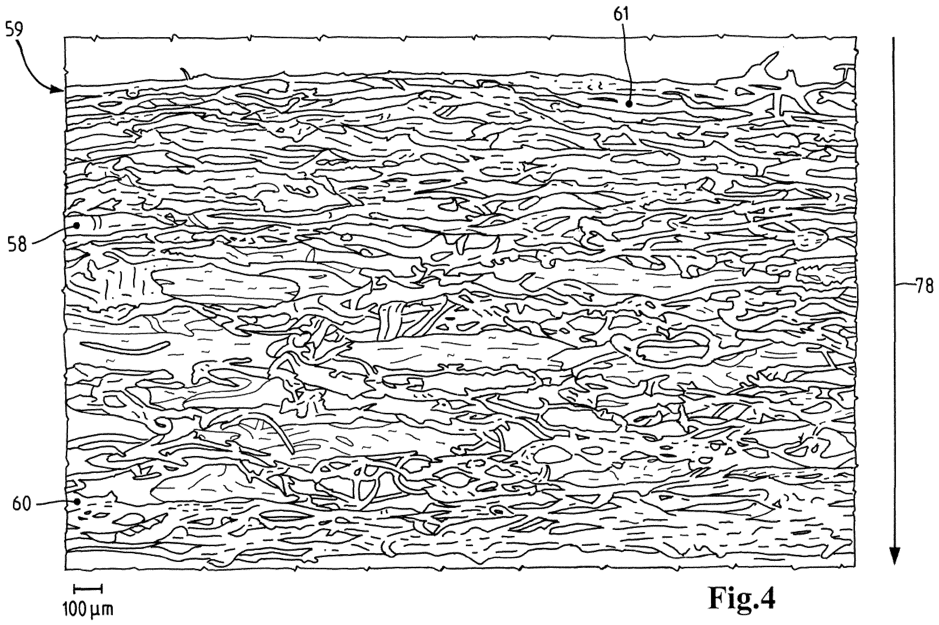

Bei dem Schwammtuchmaterial handelt es sich um ein insbesondere schichtförmiges Gebilde mit einer Dicke im trockenen Zustand von etwa 0,4 cm bis 2 cm. Die Figuren 2 und 3 zeigen Rasterelektronenmikroskop-Aufnahmen des Schwammtuchmaterials des Koaleszenzmediums 58 in Durchströmrichtung 78 des Kraftstoffs betrachtet. Die Figur 4 zeigt das Schwammtuchmaterial in einer Rasterelektronenmikroskop-Aufnahme quer zur Durchströmrichtung 78. Dort ist die Schichtstruktur des Schwammtuchmaterials erkennbar.

Das Schwammtuchmaterial ist nach einem Viskoseverfahren, beispielsweise einem Cellulosexanthogenat-Verfahren, hergestellt. Hierzu wird Holz in Reaktoren mittels Lösemitteln zu Viskose 59 verarbeitet. Baumwolle wird als Stapelfaser mit definierten Faserlängen durch Reißen vereinzelt Die Baumwolifasern 60 können insbesondere in der Figur 2 erkannt werden. Der Anteil von Viskose an dem Ausgangsmaterial für das Schwammtuchmaterial beträgt etwa 70 %, der Anteil an Baumwolle etwa 30 %.

Dann werden die zunächst fließfähige Viskose 59 und die Baumwollfasern 60 zusammen mit Glaubersalz und optional mit Farbe vermischt und verknetet. Das eingearbeitete Glaubersalz dient der Porenbildung, Es gibt später die Porengröße des fertigen Schwammtuchmaterials vor.

Die verknetete Masse wird beispielsweise maschinell, insbesondere mittels Düsen, auf ein Gitter gelegt, beispielsweise gestrichen.

Anschließend wird die Masse auf dem Gitter getrocknet und verfestigt sich. In dem Verfestigungsprozess kann die Viskose regeneriert werden. Die Viskose 59 und die Baumwollfasern 60 verbinden sich zu einer Einheit. Dabei durchwirkt die zunächst fließfähige Viskose 59 die Baumwollfasern 60. Die Viskose 59 "verschmilzt" sozusagen zwischen dem Baumwollfasern 60 zu größeren, zusammenhängenden Bereichen, in welchen Kristalle des Glaubersalzes eingebettet sind. Die Viskose 59 wirkt als Bindematerial und verbindet die Baumwollfasern 60. Die Baumwollfasern 60 wirken als Trägermaterial und tragen wesentlich zur Festigkeit des fertigen Schwammtuchmaterials bei.

Es erfolgt das Auswaschen des Glaubersalzes. Die gelösten Kristalle des Glaubersalzes werden ausgewaschen. Die ausgewaschene Masse wird getrocknet. Das fertigte Schwammtuchmaterial weist die entsprechenden Poren 61 auf.

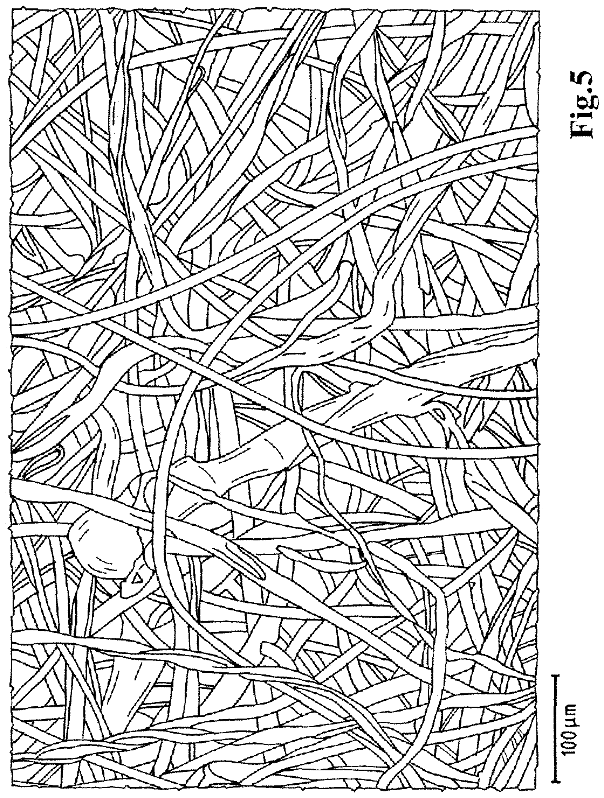

In der Figur 5 ist zur Unterscheidung ein aus dem Stand der Technik bekanntes Koaleszenzmaterial aus einem Vliesmaterial aus Baumwolle, Viskose und Polyesterfasern (PES) gezeigt. Es ist deutlich erkennbar, dass die dortigen Fasern nicht mittels eines Bindematerials, wie dies erfindungsgemäß der Fall ist, verbunden sind.

Die Trenneinheit 56 verfügt über einen Stützkorb 62 mit einem Anschlussabschnitt 64, welcher auch den Einstecksteg 54 aufweist, und ein Trennmedium 66.

Der Anschlussabschnitt 64 ist etwa scheibenförmig mit einer koaxialen Öffnung, in die der Verbindungsstutzen 22 des Deckels 16 hinein ragt. Auf seiner dem Deckel 16 zugewandten Außenseite verfügt der Anschlussabschnitt 64 über einen koaxialen Anschlussstutzen 68. Der Anschlussstutzen 68 ist an seiner freien Stirnseite um 90 Grad radial nach innen gebogen. Auf dem radial inneren Rand des Anschlussstutzens 68 sitzt eine Profilringdichtung 70. In den Anschlussstutzen 68 ist der Verbindungsstutzen 22 so eingesteckt, dass die Verbindung mit der Profilringdichtung 70 abgedichtet ist.

Die Trenneinheit 56 ist mit dem Trennmedium 66 voran axial durch die Öffnung 50 der Anschlussendscheibe 42 gesteckt. Der Stützkorb 62 und das Trennmedium 66 befinden sich in dem vom Koaleszenzmedium 58 begrenzten Innenraum, also auch im Innenraum 45 des Filtermediums 38.

Das Trennmedium 66 besteht aus einem hydrophoben Siebgewebe. Es hat die Form eines zur Filterachse 24 koaxialen Rohres. Es erstreckt sich von der Anschlussendscheibe 42 bis zur Abschlussendscheibe 40. Das Trennmedium 68 ist umfangsmäßig geschlossen.

Die Umfangswand des Stützkorbs 62 ist gitterartig aufgebaut und flüssigkeitsdurchlässig. Auf seiner der Verbindungsstutzen 22 zugeordneten Stirnseite ist der Stützkorb 62 offen. Die dem Wassersammelraum 32 zugewandte untere Stirnseite des Stützkorbs 62 ist geschlossen. Das Trennmedium 66 liegt an der Umfangsseite des Stützkorbs 62 an.

Zwischen dem Trennmedium 66 und dem Koaleszenzmedium 58 befindet sich im Innenraum 45 ein Ausfällspalt 74. Der Ausfällspalt 74 hat die Form eines Ringraums. Der Ausfällspalt 74 ist radial außen durch das Koaleszenzmedium 58 und radial innen durch das Trennmedium 66 begrenzt.

An der radial äußeren Umfangsseite der Abschlussendscheibe 40 ist außerdem eine Ringdichtung 72 angeordnet, welche sich radial außen gegen die radial innere Umfangsseite des Filtertopfs 14 abstützt. Die Ringdichtung 72 dichtet den Zulaufraum 28 gegen den Wassersammelraum 32 ab.

Beim Betrieb des Kraftstofffilters 10 wird zu reinigender, Additiv enthaltender Kraftstoff, der mit Wasser und Schmutzpartikeln belastet sein kann, aus der Kraftstoffzuleitung, angedeutet durch einen Pfeil 76, durch den Einlassstutzen 26 dem Zulaufraum 28 zugeführt.

Der Kraftstoff durchströmt das Filtermedium 38, angedeutet durch Pfeile 78, von dessen Rohseite radial außen zu seiner Reinseite radial innen. Dabei wird der Kraftstoff von den Partikeln befreit. Das Filtermedium 38 bildet eine erste Stufe des insgesamt dreistufigen Kraftstofffilters 10 für die ReinigungWasserabscheidung.

Auf der Reinseite durchströmt der von Partikeln befreite Kraftstoff mit dem Additiv die Poren 61 des Koaleszenzmediums 58 von radial außen nach innen. Dabei werden im Kraftstoff enthaltene, auch kleinste Wassertröpfen in den Poren 61 des Koaleszenzmediums 58 eingefangen und zu größeren Wassertropfen vereinigt. Das Koaleszenzmedium 58 bildet eine zweite Stufe für die Reinigung/Wasserabscheidung. Wenn die Tropfengröße ausreichend ist, werden die großen Wassertropfen vom durchströmenden Kraftstoff wieder mitgerissen.

Der Kraftstoff mit dem Additiv und die großen Wassertropfen durchströmen die Öffnungen des Mittelrohrs 43 und gelangen in den Ausfällspalt 74.

Der Kraftstoff mit dem Additiv durchströmt das Trennmedium 66, welches eine dritte Stufe für die Reinigung/Wasserabscheidung bildet, von radial außen nach innen, angedeutet durch Pfeile 80, und gelangt nach oben in den Ablaufraum 20. Der gereinigte und von Wasser befreite Kraftstoff mit dem Additiv verlässt den Ablaufraum 20 über den Auslassstutzen 18, angedeutet durch Pfeile 82, und wird der Kraftstoffableitung zugeführt.

Die großen Wassertropfen hingegen werden durch das Trennmedium 66 zurückgehalten. Sie sinken im Ausfällspalt 74 aufgrund ihres im Vergleich zum Kraftstoff größeren spezifischen Gewichts nach unten, angedeutet durch Pfeile 84, in den Wassersammelraum 32.

Sobald der Wasserstandsensor des Wasserablassventils 34 das Erreichen des vorgegebenen Maximalwasserstands erfasst, wird das Wasserablassventil 34 automatisch geöffnet Das Wasser verlässt den Wassersammelraum 32 durch den Wasserablaufstutzen 30 und gelangt in die Wasserablaufleitung,

Zu Wartungszwecken, beispielsweise zum Austausch oder zur Reinigung des Filterelements 36, wird der Deckel 16 in axialer Richtung von dem Filtertopf 14 entfernt. Das Filterelement 36 wird dann in axialer Richtung aus dem Filtertopf 14 heraus gezogen.

Zum Einbau wird das Filterelement 36 mit der Abschlussendscheibe 40 voran in axialer Richtung in den Filtertopf 14 gesteckt. Anschließend wird der Deckel 16 mit dem Verbindungsstutzen 22 voran in axialer Richtung auf die offene Seite des Filtertopfs 14 gesteckt, so dass der Verbindungsstutzen 22 dicht in die Profilringdichtung 70 ragt.

## Patentansprüche

1. Koaleszenzelement (36) einer Wasserabscheidevorrichtung, insbesondere eines Kraftstofffilters (10), für Kraftstoff, insbesondere Dieselkraftstoff, insbesondere mit wenigstens einem Additiv, insbesondere einer Brennkraftmaschine, insbesondere eines Kraftfahrzeugs, das in einem Gehäuse (12) der Wasserabscheidevorrichtung (10) so angeordnet werden kann, dass es wenigstens einen Kraftstoffeinlass (26) des Gehäuses (12) von wenigstens einem Kraftstoffauslass (18) trennt, wobei im Strömungsweg (78) des Kraftstoffs wenigstens ein Filtermedium (38) und wenigstens ein als Hohlkörper gestaltetes Koaleszenzmedium (58) zur Abscheidung von im Kraftstoff enthaltenem Wasser angeordnet ist, und wobei im Strömungsweg (78) des Kraftstoffs hinter dem wenigstens einen Koaleszenzmedium (58), dieses umgebend oder in dem von ihm begrenzten Innenraum, wenigstens ein als Hohlkörper gestaltetes hydrophobes, kraftstoffdurchlässiges Trennmedium (66) zur Abscheidung von im Kraftstoff enthaltenem Wasser angeordnet ist, derart, dass zwischen dem wenigstens einen Koaleszenzmedium (58) und dem wenigstens einen Trennmedium (66) wenigstens ein Ausfällspalt (74) für abgeschiedenes Wasser realisiert ist, **dadurch gekennzeichnet, dass** das wenigstens eine Koaleszenzmedium (58) wenigstens ein Schwammtuchmaterial aufweist, welches nach einem Viskoseverfahren, insbesondere einem Cellulosexanthogenat-Verfahren, hergestellt ist.

2. Koaleszenzelement nach Anspruch 1, **dadurch gekennzeichnet, dass** das wenigstens eine Koaleszenzmaterial synthetisch hergestellt ist.

3. Koaleszenzelement nach Anspruch 1 oder 2, **dadurch gekennzeichnet, dass** das wenigstens eine Koaleszenzmaterial Cellulose, insbesondere Viskose oder regenerierte Cellulose, oder eine Mischung aus Cellulose, insbesondere Viskose oder regenerierter Cellulose, und Baumwolle zumindest aufweist.

4. Koaleszenzelement nach einem der vorigen Ansprüche, **dadurch gekennzeichnet, dass** das wenigstens eine Koaleszenzmaterial Fasern, insbesondere Cellulosefasern/Viskose und/oder Baumwollfasern, aufweist.

5. Koaleszenzelement nach einem der vorigen Ansprüche, **dadurch gekennzeichnet, dass** das wenigstens eine Koaleszenzmaterial wenigstens ein Trägermaterial umfasst, welches mit wenigstens einem Bindematerial durchwirkt ist.

6. Koaleszenzelement nach einem der vorigen Ansprüche, **dadurch gekennzeichnet, dass** das wenigstens eine Koaleszenzmedium (58), gegebenenfalls das wenigstens eine Filtermedium (38) und/oder gegebenenfalls das wenigstens eine Trennmedium (66) koaxial angeordnet sind.

7. Koaleszenzelement nach einem der vorigen Ansprüche, **dadurch gekennzeichnet, dass** das Koaleszenzelement ein Rundfilterelement (36) ist.

8. Wasserabscheidevorrichtung, insbesondere Kraftstofffilter (10), für Kraftstoff, insbesondere Dieselkraftstoff, insbesondere mit wenigstens einem Additiv, insbesondere einer Brennkraftmaschine, insbesondere eines Kraftfahrzeugs, mit einem Gehäuse (12), welches wenigstens einen Kraftstoffeinlass (26) für zu behandelnden, insbesondere zu reinigenden, Kraftstoff, wenigstens einen Kraftstoffauslass (18) für behandelten Kraftstoff und wenigstens einen Wasserauslass (30) für vom Kraftstoff abgeschiedenes Wasser aufweist, **dadurch gekennzeichnet, dass** im Strömungsweg (78) des Kraftstoffs wenigstens ein Koaleszenzelement (36) mit einem Koaleszenzmedium (58) zur Abscheidung von im Kraftstoff enthaltenem Wasser nach einem der Ansprüche 1 bis 7 angeordnet ist.

9. Wasserabscheidevorrichtung nach Anspruch 8, **dadurch gekennzeichnet, dass** das Gehäuse (12) öffenbar ist und das wenigstens eine Koaleszenzelement (36) austauschbar im Gehäuse (12) angeordnet ist.

## Claims

1. Coalescence element (36) of a water-separating device, in particular of a fuel filter (10), for fuel, in particular Diesel fuel, in particular with at least one additive, in particular of an internal combustion engine, in particular of a motor vehicle, which can be disposed in a housing (12) of the water-separating device (10) in such a way that it separates at least one fuel inlet (26) of the housing (12) from at least one fuel outlet (18), wherein at least one filter medium (38) and at least one coalescence medium (58) designed as hollow body is disposed in the flow path (78) of the fuel for separating water contained in the fuel, and wherein in the flow path (78) of the fuel behind the coalescence medium (58), surrounding it or in the interior area defined by it, at least one hydrophobic, fuel-permeable separating medium (66) designed as hollow body for separating water contained in the fuel is disposed in such a way that between the at least one coalescence medium (58) and the at least one separating medium (66) a precipitation gap (74) for separated water is realized, **characterized in that** the at least one coalescence medium (58) features at least one sponge cloth material which is produced by a viscose method, in particular by a cellulose xanthate method.

2. Coalescence element according to claim 1, **characterized in that** the at least one coalescence material is synthetically produced.

3. Coalescence element according to claim 1 or 2, **characterized in that** the at least one coalescence material features at least cellulose, in particular viscose or regenerated cellulose, or a mixture of cellulose, in particular viscose or regenerated cellulose, and cotton.

4. Coalescence element according to one of the preceding claims, **characterized in that** the at least one coalescence material features fibers, in particular cellulose fibers/viscose and/or cotton fibers.

5. Coalescence element according to one of the preceding claims, **characterized in that** the at least one coalescence material comprises at least one base material which is interweaved with at least one bonding material.

6. Coalescence element according to one of the preceding claims, **characterized in that** the at least one coalescence medium (58), possibly the at least one filter medium (38) and/or possibly the at least one separating medium (66) are disposed coaxially.

7. Coalescence element according to one of the above claims, **characterized in that** the coalescence element is a round filter element (36).

8. Water-separating device, in particular fuel filter (10) for fuel, in particular Diesel fuel, in particular with at least one additive, in particular of an internal combustion engine, in particular of a motor vehicle, with a housing (12) which features at least one fuel inlet (26) for fuel to be treated, in particular to be cleaned, at least one fuel outlet (18) for treated fuel and at least one water outlet (30) for water separated from the fuel, **characterized in that** at least one coalescence element (36) with one coalescence medium (58) for separating water contained in the fuel is disposed in the flow path (78) of the fuel according to one of the claims 1 to 7.

9. Water-separating device according to claim 8, **characterized in that** the housing (12) is openable and that the at least one coalescence element (36) is disposed replaceably in the housing (12).

## Revendications

1. Élément de coalescence (36) d'un dispositif de séparation d'eau, notamment d'un filtre à carburant (10), notamment à gazole, notamment avec au moins un additif, notamment d'un moteur à combustion interne, notamment d'un véhicule automobile, qui peut être placé dans un boîtier (12) du dispositif de séparation d'eau (10) de manière à ce qu'il sépare une entrée de carburant (26) du boîtier (12) d'au moins une sortie de carburant (18), au moins un milieu filtrant (38) et au moins un matériau de coalescence (58) exécuté sous forme de corps creux et destiné à séparer l'eau contenue dans le carburant étant disposés dans le trajet de flux (78) du carburant, et au moins un milieu de séparation (66) exécuté sous forme de corps creux, hydrophobe et perméable au carburant et destiné à séparer l'eau contenue dans le carburant étant placé, dans le trajet de flux (78) du carburant, derrière le matériau de coalescence (58), au moins au nombre d'un, autour de ce dernier ou dans l'espace intérieur limité par ce dernier, de manière à ce qu'au moins une fente de précipitation (74) soit ménagée entre le matériau de coalescence (58), au moins au nombre d'un, et le milieu de séparation (66), au moins au nombre d'un, pour l'eau séparée, **caractérisé en ce que** le matériau de coalescence (58), au moins au nombre d'un, présente un matériau en tissu éponge fabriqué selon un procédé de viscose, notamment un procédé de xanthogénate de cellulose.

2. Élément de coalescence selon la revendication 1, **caractérisé en ce que** le matériau de coalescence, au moins au nombre d'un, est fabriqué de manière synthétique.

3. Élément de coalescence selon la revendication 1 ou 2, **caractérisé en ce qu'**au moins un matériau de coalescence présente au moins de la cellulose, notamment de la viscose ou de la cellulose régénérée, ou encore un mélange de cellulose, notamment de viscose ou de cellulose régénérée, et de coton.

4. Élément de coalescence selon l'une des revendications précédentes, **caractérisé en ce que** le matériau de coalescence, au moins au nombre d'un, comporte des fibres, notamment des fibres de cellulose/de la viscose et/ou des fibres de coton.

5. Élément de coalescence selon l'une des revendications précédentes, **caractérisé en ce que** le matériau de coalescence, au moins au nombre d'un, comporte au moins un matériau de base qui est entremêlé au moins d'un matériau de liaison.

6. Élément de coalescence selon l'une des revendications précédentes, **caractérisé en ce que** le matériau de coalescence (58), au moins au nombre d'un, éventuellement le milieu filtrant (38), au moins au nombre d'un, et/ou éventuellement le milieu de séparation (66), au moins au nombre d'un, sont disposés de manière coaxiale.

7. Élément de coalescence selon l'une des revendications précédentes, **caractérisé en ce que** l'élément de coalescence est un élément filtrant rond (36).

8. Dispositif de séparation d'eau, notamment filtre à carburant (10), notamment à gazole, notamment avec au moins un additif, notamment d'un moteur à combustion interne, notamment d'un véhicule automobile, avec un boîtier (12) qui présente au moins une entrée de carburant (26) pour le carburant à traiter, notamment à filtrer, au moins une sortie de carburant (18) pour le carburant traité et au moins une sortie d'eau (30) pour l'eau séparée du carburant, **caractérisé en ce qu'**au moins un élément de coalescence (36) avec un matériau de coalescence (58) destiné à séparer l'eau contenue dans le carburant est disposé dans le trajet de flux (78) du carburant selon l'une des revendications 1 à 7.

9. Dispositif de séparation d'eau selon la revendication 8, **caractérisé en ce que** le boîtier (12) peut être ouvert et que l'élément de coalescence (36), au moins au nombre d'un, est disposé dans le boîtier (12) de manière à pouvoir être remplacé.
